(19) Europäisches Patentamt
European Patent Office
Office européen des brevets

(11) **EP 4 417 964 A1**

(12) **EUROPÄISCHE PATENTANMELDUNG**

(43) Veröffentlichungstag:
21.08.2024 Patentblatt 2024/34

(21) Anmeldenummer: 24157717.0

(22) Anmeldetag: 15.02.2024

(51) Internationale Patentklassifikation (IPC):
*G01N 15/06* (2024.01)

(52) Gemeinsame Patentklassifikation (CPC):
**G01N 15/1012;** G01N 15/065; G01N 15/0656;
G01N 2015/1014

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **17.02.2023 AT 501082023**

(71) Anmelder: **AVL DiTest GmbH
8020 Graz (AT)**

(72) Erfinder:
• **Schriefl, Mario
8010 Graz (AT)**
• **Krasa, Helmut
8010 Graz (AT)**
• **Bergmann, Alexander
8052 Graz (AT)**

(74) Vertreter: **Patentanwälte Pinter & Weiss OG
Prinz-Eugen-Straße 70
1040 Wien (AT)**

(54) **KALIBRIERAEROSOL UND KALIBRIERANORDNUNG UND KALIBRIERVERFAHREN MIT DIESEM KALIBRIERAEROSOL**

(57) Um die Kalibrierung eines Partikelmessgeräts (PM) in einer Kalibrieranordnung (1) mit einem Kalibrierverfahren mit Kalibrieraerosol (3) einfach durchführen zu können ist vorgesehen, zur Kalibrierung ein Alkalimetall-Iodid in Form einer ionischen Verbindung aus einem Alkalimetall und Iod als Kalibrierpartikel (4) im Kalibrieraerosol (3) zu verwenden, wobei das Kalibrieraerosol (3) eine vorgegebene Kalibrierpartikelgrößenverteilung und eine vorgegebene Kalibrierpartikelkonzentration aufweist.

Fig. 1

EP 4 417 964 A1

**Beschreibung**

Die Erfindung betrifft eine Kalibrieranordnung bestehend aus einer Kalibrieraerosolquelle, einem Partikelzähler und einem Referenzpartikelzähler, sowie ein entsprechendes Kalibrierverfahren, sowie die Verwendung eines bestimmten Kalibrieraerosol zur Durchführung der Kalibrierung.

Luftgetragene Nanopartikel, insbesondere im Größenbereich bis ca. 300nm, sind gesundheitsschädlich, da diese Partikel aufgrund ihrer hohen Lungengängigkeit Schadstoffe in den menschlichen Körper transportieren. Solche Nanopartikel werden häufig auch als Ultra-Feinstaub bezeichnet. Es gibt vielfältige Quellen von Feinstaub, wie beispielsweise Verbrennungsprozesse, beispielsweise von Verbrennungsmotoren oder Industrieprozessen, Hausbrand, Bremsabrieb von Bremsanlagen von Fahrzeugen, Reifenabrieb von Reifen von Fahrzeugen usw. Die Partikel werden in der Regel als Aerosol transportiert, oftmals in Luft oder Abgasen als Träger.

Die zulässige Partikelemission eines Emittenten wird oftmals von gesetzlichen Vorgaben oder Regularien limitiert. Beispielsweise müssen alle Fahrzeuge mit Verbrennungsmotor (Diesel oder Benzin oder Gas) solche Limits im Rahmen der Typenzulassung und künftig auch während der Lebensdauer der Fahrzeuge im Rahmen der Periodisch Technischen Überprüfung (PTI) einhalten. Einzuhalten ist in diesem Fall beispielsweise eine bestimmte zulässige abgegebene Partikelanzahlkonzentration, beispielsweise eine Konzentration von Verbrennungspartikeln in einem Abgas eines Verbrennungsmotors. Für die Typenzulassung von Fahrzeugen sind von den UN (United Nations) Messprozeduren zur Bestimmung der Partikelkonzentration durch das sogenannten Particle Measurement Programme (PMP) festgelegt. Für andere Anwendungen können andere Partikelcharakteristika verwendet werden, wie beispielsweise eine Partikelanzahl (von Partikel bestimmter Größe), eine Partikelgrößenverteilung, eine Partikelmasse usw.

Um eine bestimmte Partikelcharakteristik in einem Aerosol zu erfassen werden Partikelmessgeräte verwendet. Gängige bekannte Partikelmessgeräte sind ein Kondensationspartikelzähler oder ein Diffusionsladungssensor. Beim Kondensationspartikelzähler werden Partikel durch Kondensation eines Betriebsmittels vergrößert und anschließend optisch detektiert. Oftmals wird ein Kondensationspartikelzähler mit Betriebsmittel Butanol verwendet. Der Diffusionsladungssensor beruht auf der elektrischen Aufladung der in einem Aerosol enthaltenen Partikel mittels einer Ionenquelle, z.B. einer Corona-Entladung. Lässt man das Aerosol mit den elektrisch geladenen Partikeln durch einen Faradaykäfig strömen, kann die Ladung mit einem Elektrometerverstärker gemessen werden und daraus auf die Partikelanzahl oder Partikelkonzentration geschlossen werden. Daneben gib es noch weitere Partikelmessgeräte zur Messung einer bestimmten Partikelcharakteristik, beispielsweise einen Photoelektrischen Partikelsensor, ein Aethalometer, einen Photoakustischen Partikelsensor, einen Lichtstreupartikelsensor oder ein Opazimeter.

Partikelmessgeräte sind regelmäßig zu kalibrieren. Als Kalibrierung wird ein Messprozess zur Feststellung der Abweichung eines Messgerätes gegenüber einem Referenzmessgerät verstanden. Je nach festgestellter Abweichung im Rahmen einer Konformitätsfeststellung kann das Partikelmessgerät weiter betrieben werden, oder muss einer Wartung oder Justierung unterzogen werden, was üblicherweise beim Hersteller des Partikelmessgeräts oder in eigenen Prüflabors stattfindet.

Bei der Kalibrierung ist ein definiertes Kalibrieraerosol mit Kalibrierpartikeln zu verwenden, insbesondere ein Kalibrieraerosol mit einer definierten vorgegebenen Kalibrierpartikelkonzentration und Kalibrierpartikelgrößenverteilung. Ein solches Kalibrieraerosol ist für die Kalibrierung in der Regel vor Ort zu erzeugen.

Zur Kalibrierung von Kondensationspartikelzählern kann beispielsweise die Messung einer monodispersen Zähleffizienzkurve, sowie zusätzlich eine polydisperse Linearitätsmessung erforderlich sein. Bei der monodispersen Messung wird ein Kalibrieraerosol mit Kalibrierpartikeln einer bestimmten Kalibrierpartikelgröße verwendet, wobei üblicherweise verschiedene Kalibrierpartikelgrößen gemessen werden. Bei der polydispersen Messung wird ein Kalibrieraerosol mit Kalibrierpartikeln einer bestimmten Kalibrierpartikelgrößenverteilung oder in einem bestimmten Kalibrierpartikelgrößenbereich verwendet. Das kann auch bei verschiedenen Kalibrierpartikelkonzentrationen im Kalibrieraerosol gemacht werden. Mit einer monodispersen Messung kann eine Zähleffizienz des Partikelmessgeräts bei einer bestimmten Kalibrierpartikelgröße oder bei verschiedenen Kalibrierpartikelgrößen bestimmt werden. Die polydisperse Messung wird beispielsweise für eine Linearitätsmessung verwendet, mit der die Messergebnisse des Partikelmessgeräts mit denen des Referenzmessgeräts verglichen werden. Die monodisperse Messung kann bei der Linearitätsmessung zur Kompensation von systematischen Fehlern, beispielsweise ein systematisches Überzählen oder Unterzählen der Partikeln, verwendet werden. Für die Linearitätsmessung werden polydisperse Aerosole unterschiedlicher Partikelkonzentration gemessen. In die gemessenen Messwerte wird durch eine lineare Regression eine Gerade gelegt. Die Steigung dieser Geraden (die idealerweise Eins ist) und die mittlere quadratische Abweichung der Messwerte von der Geraden können für die Kalibrierung ausgewertet werden. Neben der Linearitätsmessung kann in ähnlicher Weise eine polydisperse Vergleichsmessung bei verschiedenen Konzentrationen in Kombination mit der einfachen Bestimmung der Messabweichung für jede Konzentration erfolgen.

Es sind aber natürlich auch anderer Kalibrierverfahren denkbar, insbesondere für andere Partikelmessgeräte.

Partikelmessgeräte werden üblicherweise im Feld an unterschiedlichen Einsatzorten betrieben, beispielsweise für Fahrzeuge in Werkstätten oder Prüfhallen. Damit ist es wünschenswert, ein Partikelmessgerät auch an seinem Einsatzort zu kalibrieren. Diese Kalibrierung muss möglichst effektiv, kostengünstig, einfach in der Handhabung, sowie ungefährlich sein, insbesondere was verwendete Betriebsmittel und Betriebsbedingungen der Kalibrieranordnung anbelangt. Als Kalibrieraerosol für solche vor Ort Kalibrierungen kommen an sich nur Salzaerosole in Frage, da diese einfach, stabil und reproduzierbar vor Ort erzeugt werden können, beispielsweise durch Zerstäuberverfahren aus einer Salzlösung. Zudem sind diese Salzaerosole für den Menschen ungefährlich was deren Erzeugung, als auch die Aerosole an sich betrifft. Eine Rußaerosolerzeugung bräuchte hingegen stets einen Verbrennungsprozess, welcher gefährlich in der Handhabung und nicht praktikabel für das Feld ist, da brennbare Gase mitgeführt werden müssen. Als gängiges Kalibrieraerosol werden deshalb in der Regel zerstäubte und getrocknete luftgetragene Natriumchlorid (NaCl) Partikel verwendet.

Es hat sich jedoch gezeigt, dass Partikelmessgeräte eine Abhängigkeit der Messung vom zu messenden Partikelmaterial aufweisen. Für Diffusionsladungssensoren besteht vor allem eine Abhängigkeit zur geometrischen Partikelform (Morphologie, Oberfläche, fraktale Dimension), während für einen Kondensationspartikelzähler eine chemische und morphologische Abhängigkeit zwischen Partikelmaterial und dem verwendeten Betriebsmittel besteht. Auch für andere Partikelmessgeräte bestehen solche oder andere Abhängigkeit vom zu messenden Partikelmaterial. Das bedeutet, dass ein Partikelmessgerät, das für eine bestimmte Zielanwendung (für ein bestimmtes Zielaerosol) gedacht ist, beispielsweise eine Rußpartikelmessung (Ruß als Aerosol) in einem Abgas eines Verbrennungsmotors, für ein anderes Aerosol, wie beispielsweise ein Kalibrieraerosol, bei an sich gleicher Partikelanzahl oder Partikelanzahlkonzentration unterschiedliche Messergebnisse liefert. Solche systematischen Abhängigkeiten müssen bei der Kalibrierung aber berücksichtigt und bestimmt werden, was die Kalibrierung aber aufwendiger und schwieriger macht.

Es hat sich gezeigt, dass Partikelmessgeräte insbesondere eine hohe Abhängigkeit zu NaCl aufweisen und sehr schlecht auf luftgetragene NaCl Salze als Kalibrieraerosol reagieren, siehe beispielsweise Wang X., et al., "Evaluation of a condensation particle counter for vehicle emission measurement: Experimental procedure and effects ofcalibration aerosol material", Journal of Aerosol Science 41 (2010) 306-318. Beispielsweise fällt die Zähleffizienz eines Kondensationspartikelzähler bei einem polydispersem NaCl Aerosol (mit einem mittleren Partikeldurchmesser von 70 nm) auf 50% ab, während es mit Verbrennungsruß ca. 100% Zähleffizienz aufweist. Zudem besteht auch eine Zunahme dieses Effekts mit der Erhöhung der Partikelkonzentration (d.h.

ein nichtlineares Verhalten bei einer polydispersen Linearitätsmessung). Somit wären solche Kondensationspartikelzähler als Referenzgeräte in einer Kalibrierung mit NaCl Partikel als Kalibrierpartikel völlig ungeeignet. Es wäre aber auch für die Kalibrierung eines Partikelmessgerätes, insbesondere eines Kondensationspartikelzählers mit Butanol als Betriebsmittel, eine viel einfachere und kostengünstigere Kalibrierung unter Verwendung von Salzpartikel möglich, wenn diese das Problem der reduzierten Zähleffizienz sowie Nichtlinearität nicht aufwiesen.

Es ist daher eine Aufgabe der Erfindung, ein Kalibrieraerosol anzugeben, das die obigen Nachteile beim Kalibrieren eines Partikelmessgeräts nicht aufweist und das auf einfache und sicherer Weise in einer Kalibrieranordnung und in einem Kalibrierverfahren eingesetzt werden kann.

Die Erfindung beruht auf der Verwendung eines Alkalimetall-Iodids in Form einer ionischen Verbindung aus einem Alkalimetall und Iod als Kalibrierpartikel in einem Kalibrieraerosol zum Kalibrieren eines Partikelmessgeräts, wobei das Kalibrieraerosol eine vorgegebene Kalibrierpartikelgrößenverteilung und eine vorgegebene Kalibrierpartikelkonzentration aufweist. Die Kalibrierpartikelgrößenverteilung kann ein monodisperses oder polydisperses Kalibrieraerosol ergeben. Die Kalibrierpartikelkonzentration kann bedarfsabhängig eingestellt oder vorgegeben werden.

Die Kalibrieranordnung zeichnet sich dadurch aus, dass die Kalibrieraerosolquelle ein Kalibrieraerosol mit einem Iodid in Form einer ionischen Verbindung aus einem Alkalimetall und Iod als Kalibrierpartikel bereitstellt, wobei das Kalibrieraerosol eine vorgegebene Kalibrierpartikelgrößenverteilung und eine vorgegebene Kalibrierpartikelkonzentration aufweist, und die Kalibrieraerosolquelle mit dem Partikelmessgerät und dem Referenzpartikelmessgerät verbunden ist, um dem Partikelmessgerät und dem Referenzpartikelmessgerät zur Kalibrierung des Partikelmessgeräts jeweils das Kalibrieraerosol zuzuführen. Das Verfahren zum Kalibrieren eines Partikelmessgeräts, ist dadurch gekennzeichnet, dass von einer Kalibrieraerosolquelle ein Kalibrieraerosol mit einem Iodid in Form einer ionischen Verbindung aus einem Alkalimetall und Iod als Kalibrierpartikel bereitgestellt wird, wobei das Kalibrieraerosol eine vorgegebene Kalibrierpartikelgrößenverteilung und eine vorgegebene Kalibrierpartikelkonzentration aufweist, und das Kalibrieraerosol dem Partikelmessgerät und einem Referenzpartikelmessgerät zugeführt wird und das Partikelmessgerät eine Anzahl oder eine Konzentration der Kalibrierpartikel im Kalibrieraerosol ermittelt und das Referenzpartikelmessgerät eine Referenzanzahl oder eine Referenzkonzentration der Kalibrierpartikel im Kalibrieraerosol ermittelt und die Kalibrierung erfolgreich ist, wenn die Anzahl oder die Konzentration um maximal einem vorgegebenen Toleranzbereich von der Referenzanzahl oder der Referenzkonzentration abweicht. Die Art des Vergleiches ist dabei unerheblich und es sind verschiedenste Ausführungen eines Vergleichs denkbar, wie beispielsweise der Vergleich von Einzelmessungen, der Vergleich von durchschnittlichen Werten oder ein Vergleich in Form einer Linearitätsmessung.

Es wurde überraschenderweise festgestellt, dass ein Alkalimetall-Iodid in Form einer ionischen Verbindung aus einem Alkalimetall und Iod als Kalibrierpartikel in einem Kalibrieraerosol keine Materialabhängigkeiten in einem Partikelmessgerät hervorruft und sich damit zum Kalibrieren eines Partikelmessgeräts hervorragend eignet. Darüber hinaus ist ein solche Kalibrieraerosol einfach im Feld erzeugbar und ungefährlich in der Verwendung und Handhabung, sodass sich dieses auch für die Kalibrierung im Feld hervorragend eignet.

Als Alkalimetall wird bevorzugt Natrium zur Bildung eines Natriumiodids verwendet, weil das das günstigste Alkalimetall ist. Alternativ kann aus Kalium zur Bildung eines Kaliumiodids verwendet werden, ebenso wie Lithium zur Bildung eines Lithiumiodids oder Cäsium zur Bildung eines Cäsiumiodids.

Die Eigenschaften des Kalibrieraerosol kann flexibler eingestellt werden, wenn als Kalibrierpartikel ein binäres oder ternäres Gemisch aus Alkalimetall-Iodiden mit verschiedenen Alkalimetallen als Kalibrierpartikel verwendet wird.

Zur vorteilhaften Erzeugung des Kalibrieraerosol am Ort der Kalibrierung des Partikelmessgeräts, umfasst die Kalibrieraerosolquelle zur Erzeugung des Kalibrieraerosols einen Aerosolerzeuger und eine nachgeschaltete Verdünnungseinheit oder einen Aerosolerzeuger und eine nachgeschaltete Klassiereinheit oder einen Aerosolerzeuger, eine nachgeschaltete Verdünnungseinheit und eine nachgeschaltete Klassiereinheit.

Bei Verwendung des erfindungsgemäßen Kalibrieraerosols lässt sich ein Plateaueffizienzparameter, mit dem ein systematisches Überzählen oder Unterzählen des Partikelmessgeräts für die Kalibrierung kompensiert werden kann, auf einfache Weise ermitteln.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

     Fig.1 eine Kalibrieranordnung mit einem Partikelmessgerät und einem Referenzpartikelmessgerät,
     Fig.2 die Erzeugung eines Kalibrieraerosols,
     Fig.3 das Grundprinzip eines Kondensationspartikelzählers,
     Fig.4 das Grundprinzip eines Diffusionsladungssensors,
     Fig.5 die Zähleffizienz eines Kondensationspartikelzählers und
     Fig.6 eine Linearitätsmessung zur Kalibrierung.

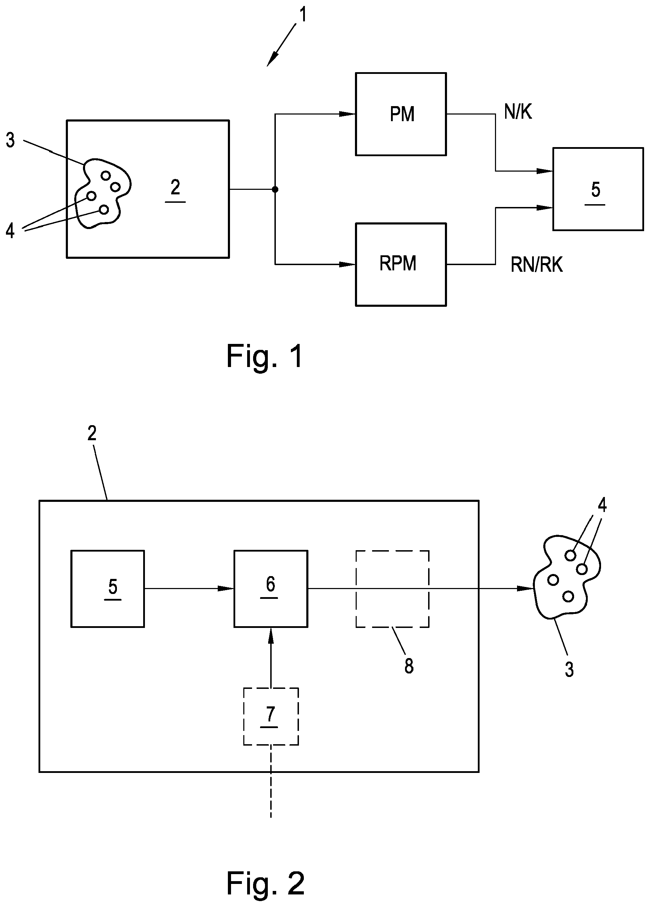

In Fig.1 ist der grundlegende Aufbau einer Kalibrieranordnung 1 bestehend aus einer Kalibrieraerosolquelle 2, einem Partikelmessgerät PM und einem Referenzpartikelmessgerät RPM dargestellt. Die Kalibrieraerosolquelle 2 stellt ein Kalibrieraerosol 3 mit Kalibrierpartikel 4 bereit. Die Kalibrieraerosolquelle 2 ist mit dem Partikelmessgerät PM und dem Referenzpartikelmessgerät RPM verbunden, beispielsweise über geeignete Leitungen, um diesen jeweils das Kalibrieraerosol 3 zuzuführen. Eine möglicherweise benötigte Pumpe zur Förderung des Kalibrieraerosols 3 ist zwecks Vereinfachung nicht dargestellt.

Die Kalibrieraerosolquelle 2 umfasst beispielsweise einen Aerosolerzeuger 5 und eine Verdünnungseinheit 6, wie in Fig.2 dargestellt. Die Verdünnungseinheit 6 verdünnt das im Aerosolerzeuger 5 erzeugte Kalibrieraerosol 3, um eine gewünschte Kalibrierpartikelkonzentration im Kalibrieraerosol 3 einzustellen. Die Verdünnungseinheit 6 ist beispielsweise als Rotationsverdünner ausgeführt, wie in EP 2 025 979 A1 beschrieben. Die Verdünnungseinheit 6 kann auch wie in WO 2022/198254 A1 beschreiben ausgeführt sein. Es ist aber auch jede andere Ausführung einer Verdünnungseinheit 6 denkbar. Der Verdünnungseinheit 6 kann auch ein Verdünnungsgas, wie beispielsweise Luft, zugeführt werden, die mit dem Kalibrieraerosol 3 zur Verdünnung in einem bestimmten Verhältnis gemischt wird. Das Verdünnungsgas kann stromauf der Verdünnungseinheit 6 auch durch einen Filter 7, wie ein HEPA (high-efficiency particulate air) Filter, geführt sein, um störende Fremdpartikel auszufiltern.

Der Aerosolerzeuger 5 umfasst beispielsweise einen Zerstäuber, beispielsweise ein Rotationszerstäuber oder Ultraschallzerstäuber, der eine Salzlösung (Kalibrierpartikel 4 gelöst in einem Lösemittel, wie beispielsweise Wasser) zerstäubt. Auf den Zerstäuber folgt eine Trockeneinheit, wie ein Diffusionstrockner oder Silikageltrockner, die das durch die Zerstäubung entstandene Aerosol trocknet, um die Feuchtigkeit aus dem Aerosol zu entfernen und das Kalibrieraerosol 3 mit den Kalibrierpartikeln 4 zu erzeugen. Natürlich sind auch andere Ausführungen eines Aerosolerzeugers 5 denkbar.

Die Kalibrieraerosolquelle 2 kann auch eine Klassiereinheit 8 enthalten, entweder nach dem Aerosolerzeugers 5 ohne Verdünnungseinheit 6 oder auch nach der Verdünnungseinheit 6, wie in Fig.2 gestrichelt angedeutet. Eine Klassiereinheit 8 dient dazu, eine bestimmte Kalibrierpartikelgröße in einem Kalibrieraerosol 3 auszuwählen, beispielsweise um ein monodisperses Aerosol zu erzeugen.

Ein monodisperses Aerosol ist ein Aerosol, das Aerosolpartikel mit einer Partikelgröße mit einer engen statistischen Verteilung enthält, beispielsweise mit einer statistischen Verteilung (z.B. eine Normalverteilung, oder eine logarithmische Normalverteilung) mit einem Mittelwert (der gewünschten Partikelgröße, zum Beispiel einem geometrischen Mitteldurchmesser) und einer geometrischen Standardabweichung von maximal 1,2. Ein polydisperses Aerosol ist hingegen ein Aerosol mit Aerosolpartikeln in einem breiten Partikelgrößenbereich.

Das Partikelmessgerät PM in der Kalibrieranordnung 1 ist beispielsweise ein Kondensationspartikelzähler, beispielsweise mit dem Betriebsmittel Butanol, oder ein Diffusionsladungssensor. Auch das Referenzpartikelmessgerät RPM Kalibrieranordnung 1 kann als Kondensationspartikelzähler, beispielsweise mit dem Betriebsmittel Butanol, oder als Diffusionsladungssensor ausgeführt sein. Auch ein anderer Typ eines Partikelmessgeräts PM oder Referenzpartikelmessgeräts RPM ist aber grundsätzlich denkbar.

Einem Kondensationspartikelzähler 10 wird ein Aerosol mit Partikeln, beispielsweise das Kalibrieraerosol 3, zugeführt, wobei im Kondensationspartikelzähler 10 Betriebsmittel 12 auf die Partikel im Aerosol aufkondensiert und diese auf diese Weise vergrößert. Die derart vergrö-ßerten Partikel werden dann detektiert und beispielsweise gezählt. Ein Diffusionsladungssensor 20 basiert hingegen auf dem Prinzip der elektrischen Ladungsmessung. Beide Partikelmessgerättypen sind aber hinlänglich bekannt.

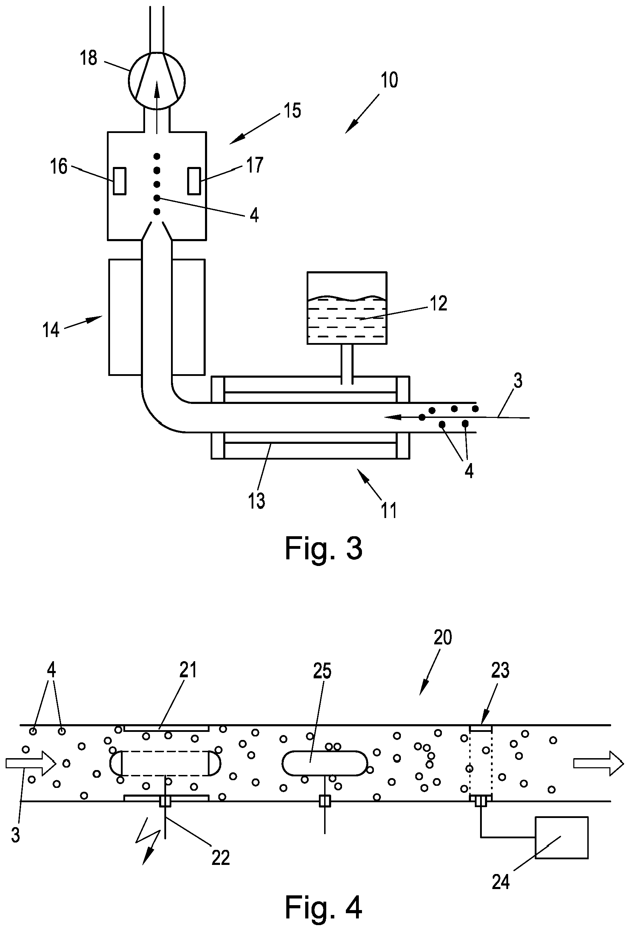

In Fig.3 ist beispielhaft der grundsätzliche bekannte Aufbau eines Kondensationspartikelzählers 10 als Partikelmessgerät PM dargestellt. Das Aerosol mit den zu messenden Partikeln, beispielsweise ein Kalibrieraerosol 3 mit Kalibrierpartikel 4, wird im Kondensationspartikelzählers 10 einer Sättigungseinheit 11 zugeführt und durch übersättigten Betriebsmitteldampf durchgeführt. Der Betriebsmitteldampf entsteht durch Verdampfen eines Betriebsmittels 12, beispielsweise Butanol, einem Alkohol oder Wasser, das einem porösen Material 13 zugeführt wird, das mit dem Raum in der Sättigungseinheit 11, durch das das Aerosol durchgeführt wird, verbunden ist. Das Aerosol wird damit in der Sättigungseinheit 11 mit Betriebsmitteldampf gesättigt. Auf die Sättigungseinheit 11 folgt eine Kondensationseinheit 14, in der das gesättigte Aerosol abgekühlt wird, womit das Betriebsmittel kondensiert. Die Partikel im Aerosol wirken dabei als Kondensationskerne, die durch Kondensation des Betriebsmittel vergrößert werden. Diese Partikel werden in einer nachfolgenden Messeinheit 15 detektiert, beispielsweise einzeln gezählt. Die Messeinheit 15 umfasst beispielsweise einen Streulichtdetektor, bei dem vom einer Lichtquelle 16 ausgehendes Licht auf die vergrößerten Partikel gerichtet wird und das Licht daran gestreut wird. Das Streulicht wird von einer Detektionseinheit 17, beispielsweise ein Bildsensor oder Lichtsensor, erfasst und ausgewertet. Es kann eine Pumpe 18 vorgesehen sein, um das Aerosol durch den Kondensationspartikelzähler 10 durchzuführen.

In Fig.4 ist beispielhaft der grundsätzliche bekannte Aufbau eines Diffusionsladungssensors 20 als Partikelmessgerät PM dargestellt. Einströmendes Aerosol mit Partikel, beispielsweise ein Kalibrieraerosol 3 mit Kalibrierpartikel 4, wird durch eine Aufladungseinheit 21 geleitet, in der eine hohe Anzahl an Ionen vorhanden ist, beispielsweise durch eine Corona-Entladung. Diese benötigt eine hohe elektrische Feldstärke, die von einem an einer Hochspannungsquelle angeschlossenen Leiter 22 bereitgestellt wird. Die Ionen heften sich durch Diffusion an die Partikel an, welche von dort an geladen sind. Diese Ladung ist proportional zur aktiven Oberfläche des Partikels und damit proportional zur Größe der Partikel. Überschüssige Ionen können optional und bedarfsweise in einer Ionenfalle 25 aus dem Aerosolstrom entfernt werden. Diese geladenen Partikel werden anschließend in einen Faraday-Käfig 23 eingeleitet, der an einen Elektrometerverstärker 24 angeschlossen ist. Aufgrund des Gaußschen Gesetzes der Elektrostatik ergeben sich an der Außenseite des Faraday-Käfigs Spiegelladungen. Diese fließen als elektrischer Strom über den Elektrometerstärker 24 ab. Der Strom wird im Elektrometerstärker 24 detektiert, wobei der gemessene Strom proportional zur Partikelanzahlkonzentration der Partikel ist.

Ein Verfahren zum Kalibrieren eines Partikelmessgeräts PM läuft grundsätzlich derart ab, dass ein Kalibrieraerosol 3 mit einer vorgegebenen Kalibrierpartikelgrößenverteilung und einer vorgegebenen Kalibrierpartikelkonzentration dem zu kalibrierenden Partikelmessgerät PM und einem Referenzpartikelmessgerät RPM zugeführt wird. Mit dem Partikelmessgerät PM wird eine Anzahl N oder eine Konzentration K der Kalibrierpartikel 4 im Kalibrieraerosol 3 ermittelt und mit dem Referenzpartikelzähler RPM eine Referenzanzahl RN oder eine Referenzkonzentration RK der Kalibrierpartikel 4 im Kalibrieraerosol 3. Die Anzahl N wird mit der Referenzanzahl RN verglichen oder die Konzentration K wird mit der Referenzkonzentration verglichen RK. Im Rahmen einer anschließenden Konformitätsbewertung wird die Kalibrierung als erfolgreich gewertet, wenn die Anzahl N oder die Konzentration K um maximal einem vorgegebenen Toleranzbereich, typischerweise maximal 10%, von der Referenzanzahl RN oder der Referenzkonzentration RK abweicht.

Die Konformitätsbewertung kann in einer Auswerteeinheit 5, beispielsweise eine mikroprozessorbasierte Hardware oder ein Computer mit entsprechender Auswertesoftware, durchgeführt werden, wie im Ausführungsbeispiel nach Fig.1. Hierzu erhält die Auswerteeinheit 5 die Anzahl N oder die Konzentration K (oder auch beides) und die Referenzanzahl RN oder die Referenzkonzentration RK (oder auch beides), um den Vergleich durchzuführen. Die Auswerteeinheit 5 muss aber nicht Teil der Kalibrieranordnung 1 sein. Insbesondere kann die Auswertung in der Auswerteinheit 5 auch nach der Durchführung der Messung(en) erfolgen.

Die Erfindung beruht darauf, dass zur Kalibrierung eines Partikelmessgeräts PM ein Kalibrieraerosol 3 mit Kalibrierpartikel 4 in Form eines Alkalimetall-Iodids als ionische Verbindung aus einem Alkalimetall und Iod verwendet wird. Ein Alkalimetall-Iodid ist ein anorganisches Alkalimetallsalz der Iodwasserstoffsäure. Ein solches Kalibrieraerosol 3 kann mit einem Aerosolerzeuger 5 wie oben beschrieben erzeugt werden. Die Kalibrierpartikel 4 werden im Kalibrieraerosol 3 transportiert, vorzugsweise mit Luft oder einem anderen Gas als Träger.

Als Alkalimetalle werden die chemischen Elemente Lithium, Natrium, Kalium, Rubidium, Caesium und Francium bezeichnet. Für das erfindungsgemäße Kalibrieraerosol wird als Alkalimetall bevorzugt Natrium zur Bildung eines Natriumiodids verwendet, weil Natrium das günstigste Alkalimetall ist. Es kann aber auch Kalium zur Bildung eines Kaliumiodids, Lithium zur Bildung eines Litithumiodids oder Cäsium zur Bildung eines Cäsiumiodids, oder auch ein andres Alkalimetall, verwendet werden.

Es ist auch möglich ein binäres Gemisch (aus zwei verschiedenen Alkalimetall-Iodide) oder ein ternäres Gemisch (aus drei verschiedenen Alkalimetall-Iodide) als Kalibrierpartikel 4 zu verwenden.

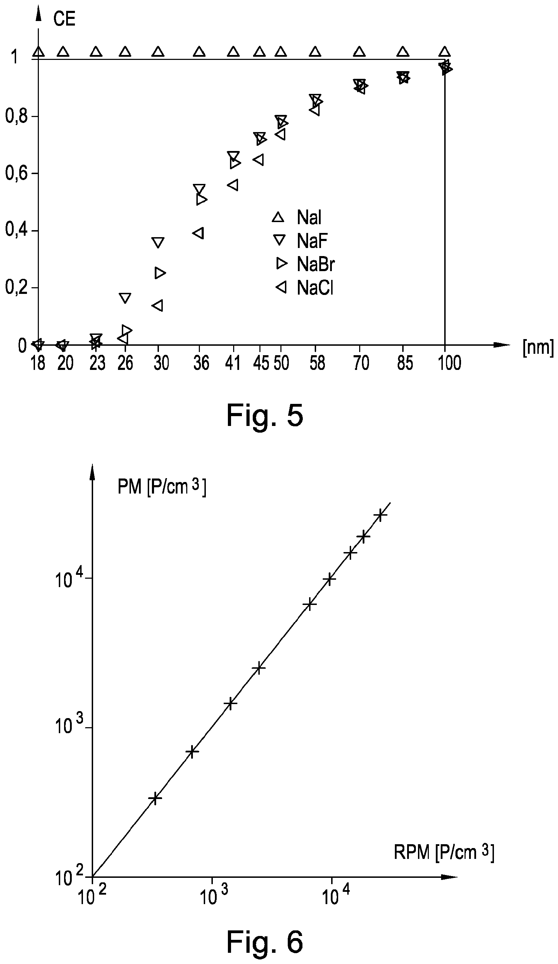

Es wurde überraschend festgestellt, dass sich ein Alkalimetall-Iodid besonders gut als Kalibrierpartikel 4 in einem Kalibrieraerosol 3 zur Kalibrierung eines Partikelmessgeräts PM eignet, weil festgestellt wurde, dass ein Partikelmessgerät PM, insbesondere in Form eines Kondensationspartikelzählers 10 oder Diffusionsladungssensors 20, keine nennenswerte Abhängigkeit der Messung von einem solchen Alkalimetall-Iodid aufweist. Das wird mit Bezugnahme auf die Fig.5 erläutert.

Es wurde ein Kondensationspartikelzähler 10 mit Betriebsmittel Butanol verwendet, beispielsweise ein AVL CPC der Firma AVL List GmbH oder ein TSI 3790 der Firma TSI GmbH. Es wurden verschiedene Aerosole mit verschiedenen Aerosolpartikeln bereitgestellt, konkret Natriumchlorid (NaCl), Natriumfluorid (NaF), Natriumbromid (NaBr) und ein erfindungsgemä-ßes Natriumiodid (NaI) als Aerosolpartikel. Bereitgestellt wurden jeweils monodisperse Aerosole mit Partikelgrößen (geometrischer Mittelwert) im Bereich von 18nm bis 100nm und mit jeweils der gleichen Partikelkonzentration. Für jedes Aerosol wurde mit dem Kondensationspartikelzähler 10 für jede Partikelgröße die Zähleffizienz CE ermittelt. Die Zähleffizienz CE ist das Verhältnis der tatsächlich gezählten Partikel zur bekannten Anzahl der im Aerosol enthaltenen Partikel. Die bekannte Anzahl der im Aerosol enthaltenen Partikel kommt beispielsweise von einem Referenzpartikelmessgerät RPM, das parallel dieselben monodispersen Aerosole misst.

Fig.5 zeigt die ermittelte Zähleffizienz CE für die verschiedenen Aerosolpartikel und für Partikelgrößen zwischen 18nm und 100nm. Aus Fig.5 ist ersichtlich, dass die Zähleffizienz CE für NaI über den ganzen Partikelgrößenbereich maximal (Wert ungefähr 1 = 100%) und praktisch konstant ist. Für die anderen Aerosolpartikel ergibt sich ein signifikanter Abfall der Zähleffizienz CE für kleinere Partikelgrößen und die Zähleffizienz CE nähert erst bei größeren Partikeln der maximalen Zähleffizienz. Für Partikelgrößen größer 100nm wird daher auch mit den anderen Aerosolpartikel die maximale Zähleffizienz CE erreicht. Daraus ist die Abhängigkeit der Messung vom verwendeten Aerosol ersichtlich. Diese Abhängigkeit besteht beim erfindungsgemäßen NaI erkennbar nicht.

Es wurde auch festgestellt, dass bei einem Alkalimetall-Iodid, wie NaI, als Aerosolpartikel auch keine Abhängigkeit der Zähleffizienz CE von der Partikelkonzentration besteht. Bei den anderen Aerosolpartikel wurden hingegen signifikante Abhängigkeiten der Zähleffizienz CE auch von der Partikelkonzentration festgestellt, wobei die Zähleffizienz CE typischerweise abnimmt mit zunehmender Partikelkonzentration.

Auch für andere Alkalimetalle als Natrium zeigt sich dasselbe Bild. Alkalimetall-Iodide zeigen keine Abhängigkeiten der Zähleffizienz CE eines Partikelmessgeräts PM von einer Partikelgröße oder einer Partikelkonzentration, wohingegen bei anderen ionischen Verbindungen von Alkalimetallen und auch bei anderen Kalibrierpartikeln ausgeprägte Abhängigkeiten festgestellt werden.

Diese Charakteristik zeigt sich auch bei anderen Partikelmessgerättypen, wie beispielsweise bei einem Diffusionsladungssensor, oder einem anderen Partikelmessgerättyp. Insbesondere ist auch bei einem Diffusionsladungssensor die Zähleffizienz CE von NaCl und dem erfindungsgemäße NaI sehr ähnlich wie in Fig.5 dargestellt.

In Fig.5 erkennt man außerdem, dass ein Partikelmessgerät PM Aerosolpartikel auch systematisch überzählen (wie in Fig.5) oder unterzählen kann. Das zeigt sich insbesondere bei einem Kondensationspartikelzähler 10, der die Basis für die Daten in Fig.5 ist, oder einem Diffusionsladungssensor 20, oder einem anderen Partikelmessgerättyp.

In Fig.5 ist die durchschnittliche Zähleffizienz CE bei Partikelgrößen 30nm, 50nm, 70nm und 100nm 1,081. Das bedeutet, dass das Partikelmessgerät PM die Zähleffizienz CE gegenüber dem Referenzpartikelmessgerät RPM um 8,1% zu hoch angibt. Für eine Kalibrierung kann dieses systematische Überzählen oder Unterzählen kompensiert werden.

Dazu wurde bei Kalibrierung bisher (beispielsweise mit NaCl) die Zähleffizienz CE in Abhängigkeit von der Partikelgröße mit folgender mathematischer Formel modelliert:

$$CE = A\left(1 - e^{\left(-\ln(2)\frac{d-d_0}{d_{50}-d_0}\right)}\right)$$

Darin ist A ein Plateaueffizienzparameter, d die Partikelgröße, $d_0$ die bekannte untere Detektionsgrenze (minimale Partikelgröße) des Partikelmessgeräts PM und $d_{50}$ gibt die Partikelgröße an, bei der die Zähleffizienz 50% ist.

Es ist ersichtlich, dass der Plateaueffizienzparameter A dieses Überzählen oder Unterzählen repräsentiert. In einer Kalibrierung war es daher wünschenswert, diesen Plateaueffizienzparameter A zu bestimmen. Insbesondere wenn der Plateaueffizienzparameter A verwendet wird, um das systematische Überzählen oder Unterzählen in einer poldispersen Messung mit dem Partikelmessgerät PM, beispielsweise für eine Linearitätsmessung der Kalibrierung, zu kompensieren.

Das wurde bisher so gemacht, dass einzelne Messungen eines monodispersen Kalibrieraerosols mit verschiedenen Partikelgrößen gemacht wurden, beispielsweise wie oben beschrieben. In diese Messungen (wie in Fig.5 gezeigt), wird dann die obige Kurve, die die Zähleffizienz CE modelliert, angepasst ("curve fitting"), d.h. es wird aus den Messungen der Parameter dso bestimmt und der Plateaueffizienzparameter A in der Anpassung bestimmt, sodass die Kurve die Messungen bestmöglich approximiert, beispielsweise im Sinne einer minimalen quadratischen Abweichung der Messungen zur bestimmten Kurve. Eine solche Anpassung einer Kurve an Messwerten ist hinlänglich bekannt und es erübrigen sich nähere Ausführungen hierzu.

Wenn der Plateaueffizienzparameter A bestimmt ist, kann für die Kalibrierung auch eine angepasste Linearitätsmessung gemacht werden. Bei dieser Linearitätsmessung wird ein polydisperses Kalibrieraerosol verwendet und es wird am selben polydispersen Kalibrieraerosol eine Messung mit dem Partikelmessgeräts PM und dem Referenzpartikelmessgerät RPM gemacht. Das wird für die Linearitätsmessung mit dem polydispersen Kalibrieraerosol mit unterschiedlichen Kalibrierpartikelkonzentrationen im Kalibrieraerosol wiederholt. Die Messungen mit dem Partikelmessgerät PM werden dabei mit dem Plateaueffizienzparameter A kompensiert, d.h. die Messwerte (Anzahl oder Konzentration) werden um den Plateaueffizienzparameter A nach oben oder unten korrigiert. Die Messwerte mit dem Partikelmessgerät PM (korrigiert mit dem Plateaueffizienzparameter A) und mit dem Referenzpartikelmessgerät RPM dürfen für eine erfolgreiche Kalibrierung maximal um einen vorgegebenen Toleranzbereich voneinander abweichen.

Das kann auch überprüft werden, indem eine Gerade an die Messwerte (Anzahl oder Konzentration) angepasst ("curve fitting") wird, wie in Fig.6 dargestellt. Die Messwerte des Partikelmessgeräts PM sind auf einer Achse aufgetragen und die Messwerte des Referenzpartikelmessgeräts RPM auf der anderen Achse. In Fig.6 sind die Messwerte in P(artikel) / cm$^3$ angegeben. Die Steigung der Gerade ist im Idealfall gleich Eins, weil die Messwerte im Idealfall identisch sind. Die Steigung der Gerade kann damit zur Kalibrierung verwendet werden. Zusätzlich können auch noch die Abweichungen der einzelnen Messwerte von der Geraden, beispielweise als Fehlerquadrat, für die Kalibrierung herangezogen werden. Für die Kalibrierung darf die Steigung nicht mehr als ein vorgegebener Steigungstoleranzbereich, typischerweise maximal 10%, von Wert Eins abweichen und die Abweichungen dürfen nicht größer als ein zulässiger Abweichungstoleranzbereich, typischerweise maximal 10%, sein.

Dieses Vorgehen mit der Bestimmung des Plateaueffizienzparameters A machte eine Kalibrierung bisher aufwendig, weil es viele Messungen eines monodispersen Kalibrieraerosols bedurfte, um zuerst den Plateaueffizienzparameter A zu bestimmen.

Bei Verwendung eines Alkalimetall-Iodids, beispielsweise von NaI oder KaI, als Kalibrierpartikel 4 in einem Kalibrieraerosols 3 kann dieses Vorgehen aufgrund der Unabhängigkeit der Zähleffizienz CE von der Partikelgröße erheblich vereinfacht werden, wie nachfolgend erläutert wird.

Grundsätzlich kann eine einzige Messung mit einem monodispersen Kalibrieraerosol ausreichen, um den Plateaueffizienzparameter A zu bestimmen, weil davon ausgegangen werden kann, dass das Überzählen oder Unterzählen über den ganzen Partikelgrößenbereich im Wesentlichen gleich ist (siehe Fig.5 am Beispiel von NaI). Damit kann aus einer einzigen Messung und ohne eine Kurvenanpassung der Plateaueffizienzparameter A aus den Unterschieden der Messwerte des Partikelmessgeräts PM und des Referenzpartikelmessgeräts bestimmt werden.

Es wäre aber auch möglich, gänzlich auf Messungen mit monodispersen Kalibrieraerosolen zu verzichten, was besonders vorteilhaft wäre, weil die Erzeugung eines monodispersen Kalibrieraerosols aufwendiger ist, als die Erzeugung eines polydispersen Kalibrieraerosols. Hierzu könnten mehrere Messungen mit polydispersen Kalibrieraerosolen mit verschiedenen Kalibrierpartikelkonzentrationen erzeugt werden, was sehr einfach mit einer steuerbaren Verdünnungseinheit 6 bewerkstelligt werden kann. Die verschiedenen polydispersen Kalibrieraerosole werden mit dem Partikelmessgerät PM und dem Referenzpartikelmessgerät RPM gemessen. Ist die Abweichung der Messwerte (Anzahl oder Konzentration) zu groß, beispielsweise größer als 10%, dann kann die Kalibrierung als nicht erfolgreich beendet werden. Ansonsten kann der Mittelwert der Abweichungen der Messwerte mit den verschiedenen polydispersen Kalibrieraerosol ermittelt werden und als Plateaueffizienzparameter A herangezogen werden, beispielsweise zur Korrektur der Messwerte (Anzahl oder Konzentration) für eine Linearitätsmessung. Der Plateaueffizienzparameter A könnte auf diese Weise aber grundsätzlich auch mit nur einer einzigen Messung eines polydispersen Kalibrieraerosol bestimmt werden.

Mit dem Plateaueffizienzparameter A kann dann die gemessene Anzahl N oder Konzentration K des Partikelmessgeräts PM vor dem Vergleich mit der Referenzanzahl RN oder der Referenzkonzentration RK korrigiert werden, um eine dem Partikelmessgerät PM innewohnende systematische Messabweichung zu korrigieren.

Die Kalibrierung eines Partikelmessgeräts PM kann daher bei Verwendung eines erfindungsgemäßen Kalibrieraerosols erheblich vereinfacht und verkürzt werden, was insbesondere bei Partikelmessgeräten PM im Feld von hohem Vorteil ist.

**Patentansprüche**

1. Verwendung eines Alkalimetall-Iodids in Form einer ionischen Verbindung aus einem Alkalimetall und lod als Kalibrierpartikel (4) in einem Kalibrieraerosol (3) zum Kalibrieren eines Partikelmessgeräts (PM), wobei das Kalibrieraerosol (3) eine vorgegebene Kalibrierpartikelgrößenverteilung und eine vorgegebene Kalibrierpartikelkonzentration aufweist.

2. Verwendung nach Anspruch 1, **dadurch gekennzeichnet, dass** als Alkalimetall Natrium zur Bildung eines Natriumiodids, Kalium zur Bildung eines Kaliumiodids, Lithium zur Bildung eines Litithumiodids oder Cäsium zur Bildung eines Cäsiumiodids verwendet wird.

3. Verwendung nach Anspruch 1 oder 2, **dadurch gekennzeichnet, dass** als Kalibrierpartikel (4) ein binäres oder ternäres Gemisch aus Alkalimetall-lodiden mit verschiedenen Alkalimetallen verwendet wird.

4. Kalibrieranordnung bestehend aus einer Kalibrieraerosolquelle (2), einem Partikelmessgerät (PM) und einem Referenzpartikelmessgerät (RPM), **dadurch gekennzeichnet, dass** die Kalibrieraerosolquelle (2) ein Kalibrieraerosol (3) mit einem lodid in Form einer ionischen Verbindung aus einem Alkalimetall und lod als Kalibrierpartikel (4) bereitstellt, wobei das Kalibrieraerosol (3) eine vorgegebene Kalibrierpartikelgrößenverteilung und eine vorgegebene Kalibrierpartikelkonzentration aufweist, und die Kalibrieraerosolquelle (2) mit dem Partikelmessgerät (PM) und dem Referenzpartikelmessgerät (RPM) verbunden ist, um dem Partikelmessgerät (PM) und dem Referenzpartikelmessgerät (RPM) zur Kalibrierung des Partikelmessgeräts (PM) jeweils das Kalibrieraerosol (3) zuzuführen.

5. Kalibrieranordnung nach Anspruch 4, **dadurch gekennzeichnet, dass** das Partikelmessgerät (PM) ein Kondensationspartikelzähler (10), vorzugsweise ein Kondensationspartikelzähler mit Butanol als Betriebsmittel, oder ein Diffusionsladungssensor (20) ist.

6. Kalibrieranordnung nach Anspruch 4 oder 5, **dadurch gekennzeichnet, dass** das Referenzartikelmessgerät (RPM) ein Kondensationspartikelzähler (10), vorzugsweise ein Kondensationspartikelzähler mit Butanol als Betriebsmittel, oder ein Diffusionsladungssensor (20) ist.

7. Kalibrieranordnung nach einem der Ansprüche 4 bis 6, **dadurch gekennzeichnet, dass** die Kalibrieraerosolquelle (2) zur Erzeugung des Kalibrieraerosols (3) einen Aerosolerzeuger (5) und eine nachgeschaltete Verdünnungseinheit (6) oder einen Aerosolerzeuger (5) und eine nachgeschaltete Klassiereinheit (8) oder einen Aerosolerzeuger (5), eine nachgeschaltete Verdünnungseinheit (6) und eine nachgeschaltete Klassiereinheit (8) aufweist.

8. Verfahren zum Kalibrieren eines Partikelmessgeräts (PM), wobei von einer Kalibrieraerosolquelle (2) ein Kalibrieraerosol (3) mit einem lodid in Form einer ionischen Verbindung aus einem Alkalimetall und lod als Kalibrierpartikel (4) bereitgestellt wird, wobei das Kalibrieraerosol (3) eine vorgegebene Kalibrierpartikelgrößenverteilung und eine vorgegebene Kalibrierpartikelkonzentration aufweist, und das Kalibrieraerosol (3) dem Partikelmessgerät (PM) und einem Referenzpartikelmessgerät (RPM) zugeführt wird und das Partikelmessgerät (PM) eine Anzahl (N) oder eine Konzentration (K) der Kalibrierpartikel (4) im Kalibrieraerosol (3) ermittelt und das Referenzpartikelmessgerät (RPM) eine Referenzanzahl (RN) oder eine Referenzkonzentration (RK) der Kalibrierpartikel (4) im Kalibrieraerosol (3) ermittelt und die Kalibrierung erfolgreich ist, wenn die Anzahl (N) oder die Konzentration (K) um maximal einem vorgegebenen Toleranzbereich von der Referenzanzahl (RN) oder der Referenzkonzentration (RK) abweicht.

9. Verfahren nach Anspruch 8, **dadurch gekennzeichnet, dass** die Abweichung der gemessenen Anzahl (N) oder Konzentration (K) von der Referenzanzahl (RN) oder der Referenzkonzentration (RK) als Plateaueffizienzparameter verwendet wird.

10. Verfahren nach Anspruch 9, **dadurch gekennzeichnet, dass** für die Bestimmung des Plateaueffizienzparameters ein monodisperses Kalibrieraerosol (3) verwendet wird.

11. Verfahren nach Anspruch 8, **dadurch gekennzeichnet, dass** verschiedene monodisperse Kalibrieraerosole (3) mit unterschiedlichen Partikelgröße der Kalibrierpartikel (4) mit den Partikelmessgerät (PM) und dem Referenzpartikelmessgerät (RPM) gemessen werden und für jedes monodisperses Kalibrieraerosol (3) die Anzahl (N) oder Konzentration (K) und die Referenzanzahl (RN) oder Referenzkonzentration (RK) ermittelt wird und ein Mittelwert der Abweichungen der Anzahl (N) oder der Konzentration (K) von der Referenzanzahl (RN) oder der Referenzkonzentration (RK) der Messungen mit den verschiedenen monodispersen Kalibrieraerosolen (3) als Plateaueffizienzparameter verwendet wird.

12. Verfahren nach Anspruch 8, **dadurch gekennzeichnet, dass** polydisperse Kalibrieraerosole (3) mit verschiedenen Kalibrierpartikelkonzentrationen mit den Partikelmessgerät (PM) und dem Referenzpartikelmessgerät (RPM) gemessen werden und ein Mittelwert der Abweichungen der Anzahl (N) oder der Konzentration (K) von der Referenzanzahl (RN)

oder der Referenzkonzentration (RK) der Messungen mit den verschiedenen polydispersen Kalibrieraerosolen (3) als Plateaueffizienzparameter verwendet wird.

13. Verfahren nach einem der Ansprüche 9 bis 12, **dadurch gekennzeichnet, dass** eine Linearitätsmessung durchgeführt wird, indem polydisperse Kalibrieraerosole (3) mit verschiedenen Kalibrierpartikelkonzentrationen mit den Partikelmessgerät (PM) und dem Referenzpartikelmessgerät (RPM) gemessen werden, **dass** die mit dem Partikelmessgerät (PM) gemessenen Messwerte der Anzahl (N) oder der Konzentration (K) mit dem Plateaueffizienzparameter korrigiert werden, **dass** eine Gerade an die Messwerte der Referenzanzahl (RN) oder der Referenzkonzentration (RK) und der korrigierten Anzahl (N) oder der korrigierten Konzentration (K) angepasst wird **und dass** eine Steigung der Geraden und/oder eine vorgegebene Abweichung der Messwerte von der Geraden für die Kalibrierung verwendet wird.

14. Verfahren nach Anspruch 13, **dadurch gekennzeichnet, dass** die Kalibrierung erfolgreich ist, wenn die Steigung der Geraden maximal um einen vorgegebenen Steigungstoleranzbereich von Eins abweicht.

15. Verfahren nach Anspruch 13, **dadurch gekennzeichnet, dass** die Kalibrierung erfolgreich ist, wenn die Abweichung der Messwerte von der der Geraden innerhalb eines vorgegebenen Abweichungstoleranzbereich liegen.

16. Verfahren nach einem der Ansprüche 9 bis 12, **dadurch gekennzeichnet, dass** die mit dem Partikelmessgerät (PM) gemessene Anzahl (N) oder Konzentration (K) vor dem Vergleich mit der Referenzanzahl (RN) oder Referenzkonzentration (RK) mit dem Plateaueffizienzparameter korrigiert wird.

Fig. 1

Fig. 2

Fig. 3

Fig. 4

Fig. 5

Fig. 6

| Europäisches Patentamt / European Patent Office / Office européen des brevets | **EUROPÄISCHER RECHERCHENBERICHT** | **Nummer der Anmeldung** EP 24 15 7717 |
|---|---|---|

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WANG XIAOLIANG ET AL: "Evaluation of a condensation particle counter for vehicle emission measurement: Experimental procedure and effects of calibration aerosol material", JOURNAL OF AEROSOL SCIENCE, Bd. 41, Nr. 3, 1. März 2010 (2010-03-01), Seiten 306-318, XP093181814, AMSTERDAM, NL ISSN: 0021-8502, DOI: 10.1016/j.jaerosci.2010.01.001 * Zusammenfassung * ----- | 1-16 | INV. G01N15/06 |
| A | WO 2022/192772 A1 (KANOMAX FMT INC [US]) 15. September 2022 (2022-09-15) * Seite 6, Zeile 12 - Zeile 19 * ----- | 1-16 | |
| A | EP 3 985 379 A1 (UNIV BERLIN CHARITE [DE]) 20. April 2022 (2022-04-20) * Tabelle 1 * * Absatz [0023] * * Absatz [0021] * ----- | 1-16 | RECHERCHIERTE SACHGEBIETE (IPC) G01N |

Der vorliegende Recherchenbericht wurde für alle Patentansprüche erstellt

| Recherchenort | Abschlußdatum der Recherche | Prüfer |
|---|---|---|
| Den Haag | 4. Juli 2024 | Mauritz, Jakob |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 15 7717

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-07-2024

| Im Recherchenbericht angeführtes Patentdokument | Datum der Veröffentlichung | Mitglied(er) der Patentfamilie | Datum der Veröffentlichung |
|---|---|---|---|
| WO 2022192772 A1 | 15-09-2022 | DE 112022001455 T5 | 28-12-2023 |
| | | TW 202336422 A | 16-09-2023 |
| | | US 2024167931 A1 | 23-05-2024 |
| | | WO 2022192772 A1 | 15-09-2022 |
| EP 3985379 A1 | 20-04-2022 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2025979 A1

- WO 2022198254 A1

**In der Beschreibung aufgeführte Nicht-Patentliteratur**

- **WANG X et al.** Evaluation of a condensation particle counter for vehicle emission measurement: Experimental procedure and effects ofcalibration aerosol material. *Journal of Aerosol Science,* 2010, vol. 41, 306-318